# FASCICULE DE BREVET EUROPEEN

(11) **EP 3 336 329 B1**
(45) Date de publication et mention de la délivrance du brevet: **10.07.2019**
(21) Numéro de dépôt: 17207214.2
(22) Date de dépôt: 14.12.2017
(51) Int. Cl.: F02C 3/00, F02C 3/04, F01D 15/10

(54) **UNITÉ DE GÉNÉRATION DE PUISSANCE ÉLECTRIQUE NON PROPULSIVE**
EINHEIT ZUR ERZEUGUNG VON ELEKTRISCHER HILFSLEISTUNG
AUXILIARY POWER UNIT FOR GENERATING ELECTRICAL POWER

(30) Priorité: 15.12.2016 FR 1662480
(43) Date de publication de la demande: 20.06.2018
(73) Titulaire: Safran Power Units, 31200 Toulouse (FR); Institut National Polytechnique de Toulouse, 31029 Toulouse (FR); CENTRE NATIONAL DE LA RECHERCHE SCIENTIFIQUE, 75016 Paris (FR)
(72) Inventeur: VAILLANT, Stéphane, Richard, Dominique, 77550 Moissy-Cramayel (FR); FAUCHER, Mickael, 77550 Moissy-Cramayel (FR); TURPIN, Christophe, 31100 Toulouse (FR)
(74) Mandataire: Cabinet Beau de Loménie

(56) Documents cités:
- US-A- 6 031 294
- US-B1- 8 957 539

## Description

L'invention concerne une unité de génération de puissance électrique non propulsive embarquée à bord d'un aéronef.

Les unités auxiliaires de puissance, aussi notées APU pour « auxiliary power unit » en anglais, ont pour fonction de fournir de la puissance non propulsive à bord d'un aéronef. La plupart de ces unités sont constituées de turbines à gaz à turbine liée ou turbine à gaz à simple corps fournissant, d'une part, un flux d'air comprimé, dénommé « bleed air » en anglais, et, d'autre part, de l'électricité via un générateur monté sur un réducteur entraîné par l'arbre de la machine. Les turbines à simple corps s'entendent par opposition aux machines à double corps dans lesquelles le premier corps qui produit de la puissance sous forme de gaz chauds n'est pas mécaniquement lié au deuxième corps qui transforme la puissance produite par le premier corps en puissance utile pour l'aéronef.

En règle générale, ces unités fonctionnent à une vitesse de rotation fixe afin de pouvoir alimenter le réseau électrique avec un courant électrique de fréquence fixe. Cette fréquence est déterminée par la vitesse de rotation de la turbine à gaz, le nombre de pôles électriques du générateur et le rapport de réduction du réducteur.

Dans certains cas particuliers, l'unité auxiliaire de puissance n'est utilisée pour fournir que de la puissance électrique et aucun flux d'air comprimé. C'est le cas notamment, lorsque de telles unités sont installées dans des aéronefs dits « tout électrique » dans lesquels l'électricité est le seul vecteur énergétique. Dans ces architectures, le flux d'air comprimé « bleed » n'est pas fourni par l'unité auxiliaire de puissance mais par des compresseurs électriques associés à un système de commande environnemental électrique noté ECS pour « environmental control system » en anglais. Les unités auxiliaires de puissance des aéronefs dits « tout électrique » sont donc déchargés de la génération du flux d'air comprimé « bleed » et sont dédiés uniquement à la génération de puissance électrique non propulsive.

L'unité auxiliaire de puissance est généralement optimisée pour fournir sa puissance maximale avec la consommation spécifique la plus faible, la consommation spécifique correspondant au rapport de la consommation de carburant par unité de puissance produite. De ce fait, lorsque l'unité auxiliaire de puissance doit fournir un niveau de puissance intermédiaire et donc inférieur à la puissance maximale, l'unité auxiliaire de puissance consomme plus de puissance qu'elle ne devrait au regard de la puissance produite car sa vitesse de rotation est fixée à une seule et même vitesse.

### Objet et résumé de l'invention

L'invention vise à fournir une unité auxiliaire de puissance permettant de limiter autant que possible la consommation de sa turbine à gaz quel que soit le niveau de puissance requis par le réseau et ainsi d'améliorer le rendement global de la production de puissance électrique.

Un objet de l'invention propose une unité de génération de puissance électrique non propulsive destinée à être embarquée à bord d'un aéronef, l'unité comprenant un dispositif de production d'électricité comportant une turbine à gaz et un générateur électrique mécaniquement raccordé à un arbre de sortie de la turbine à gaz, ledit générateur comportant des connexions électriques de sortie destinées à être électriquement raccordées à un réseau d'alimentation électrique embarqué d'un aéronef.

Selon une caractéristique générale de l'invention, l'unité comprend des moyens de régulation configurés pour commander la vitesse de rotation de la turbine à gaz en fonction de la puissance électrique requise par le réseau d'alimentation électrique embarqué, des moyens de stockage d'énergie.

La régulation à vitesse variable de la vitesse de rotation de la turbine à gaz permet de limiter autant que possible la consommation de la turbine à gaz et ainsi d'optimiser la consommation lorsque le besoin de puissance est inférieur à la puissance maximale que la turbine à gaz peut développer.

En effet, en diminuant la vitesse de rotation de la turbine de l'unité auxiliaire de puissance, on peut améliorer la consommation aux puissances intermédiaires. Par exemple, la consommation baisse d'environ 20% avec une diminution de la vitesse à 80% de la vitesse nominale pour une charge égale à 25% de la charge maximale.

Pour des unités auxiliaires de puissance d'aéronefs dits « tout électrique » qui ne sont dédiés qu'à la production de puissance électrique, il est possible de faire des économies de carburant aux puissances intermédiaires via une régulation à vitesse variable.

Cependant, la variabilité de la vitesse de rotation de la turbine à gaz entraîne des difficultés.

Notamment, lors de pics de charge importants, c'est-à-dire lors de brusques et importants appels de courant par le réseau d'alimentation électrique embarqué, ou lors d'une transition entre deux régimes de vitesse de rotation de turbine, il est probable que la turbine ne soit pas capable d'accélérer depuis une vitesse intermédiaire vers le régime nominal sans dépasser la marge au pompage du compresseur et/ou sans dépasser la limite maximale admise de température en entrée de la turbine et/ou sans éteindre la chambre de combustion.

L'utilisation de moyens de stockage d'énergie électrique dans l'unité permet de couvrir les transitoires de puissance entre deux régimes de vitesse de rotation de la turbine et de protéger la turbine à gaz d'accélérations trop brutales dues à des pics de courant, les accélérations brutales pouvant entraîner le pompage et/ou une augmentation trop importante de la température en entrée de la turbine.

Les moyens de stockage permettent de surmonter cette difficulté.

L'invention définit une unité de génération de puissance électrique non propulsive selon la revendication 1.

Selon un premier aspect de l'unité de production de puissance électrique non propulsive, l'unité peut comprendre en outre des moyens de gestion de puissance comportant un premier module configuré pour commander, dans un premier mode, la récupération et le stockage d'au moins une partie de la puissance produite par le dispositif de production d'électricité dans lesdits moyens de stockage, et un second module configuré pour commander, dans un second mode, l'alimentation du réseau d'alimentation électrique embarqué par un courant électrique produit à la fois à partir de la turbine à gaz et à partir des moyens de stockage, les moyens de gestion de puissance étant configurés pour actionner le premier module lorsque la vitesse de rotation de la turbine à gaz est maximale et que le niveau de charge des moyens de stockage est inférieur à un seuil de charge, et pour actionner le second module lorsqu'une variation du courant requis par le réseau embarqué est détectée.

L'unité est ainsi capable de recharger les moyens de stockage lors d'un fonctionnement nominal pendant lequel la vitesse de rotation de la turbine à gaz ne varie pas. La valeur du seuil de charge dépend des caractéristiques techniques des moyens de stockage et notamment de la durée de vie souhaitée pour les moyens de stockage. En effet, en règle générale, pour les moyens de stockage de type batterie, plus on décharge profondément et plus la durée de vie diminue. Le seuil de charge peut être fixé par exemple à une valeur entre 50% et 70% de la capacité de charge totale des moyens de stockage.

Dans le premier mode de fonctionnement, l'unité est capable de fournir la puissance à la charge, c'est-à-dire au réseau, tout en permettant à la turbine à gaz de faire varier son point de fonctionnement sans pour autant risquer de rentrer dans un mode de fonctionnement dégradant pour la turbine à gaz et en permettant la charge des moyens de stockage.

Le second mode de fonctionnement permet de faire fonctionner l'unité dans un second mode dans lequel l'énergie stockée dans lesdits moyens de stockage est utilisée pour alimenter en énergie supplémentaire le réseau d'alimentation électrique embarqué de l'aéronef. Ce second mode permet de réduire l'accélération de la turbine lors de transition entre deux régimes de vitesse de rotation de la turbine en fournissant de l'énergie mécanique ou électrique générée à partir de l'énergie stockée dans les moyens de stockage, la turbine pouvant ainsi accélérer jusqu'au régime de vitesse supérieur pendant un temps plus long et avec une accélération plus faible. Le second mode permet en outre de protéger la turbine à gaz d'accélérations trop brutales dues à des pics de courant, la surcharge de courant requise par le réseau étant surmontée par la fourniture d'énergie issue des moyens de stockage.

Selon une variante du premier aspect de l'unité de production de puissance électrique non propulsive, les moyens de régulation peuvent être configurés pour commander une augmentation de la vitesse de rotation de la turbine à gaz à une valeur supérieure à celle pour générer la puissance électrique requise par le réseau d'alimentation électrique, les moyens de gestion de puissance actionnant le premier module pour récupérer la puissance excédentaire pour recharger les moyens de stockage.

Les moyens de régulation peuvent ainsi commander d'accélérer le dispositif de production d'électricité a un niveau supérieur à celui requis par le réseau afin de ramener le niveau de charge des moyens de stockage à sa valeur nécessaire pour que le second mode d'alimentation du réseau électrique soit fonctionnel.

Selon un deuxième aspect de l'unité de production de puissance électrique non propulsive, le dispositif de production d'électricité peut comprendre des premiers moyens de conversion de puissance, lesdites connexions électriques de sortie du générateur électrique étant destinées à être électriquement raccordées au réseau d'alimentation électrique embarqué via les premiers moyens de conversion de puissance.

Les premiers moyens de conversion de puissance couplés entre la sortie du générateur électrique et le réseau permettent d'adapter le courant délivré au réseau à partir du courant délivré par le dispositif de production d'électricité.

Selon l'invention, l'unité comprend des deuxièmes moyens de conversion de puissance raccordés entre les moyens de stockage et le dispositif de production d'électricité.

Les moyens de stockage ne peuvent fournir seuls de la puissance électrique compatible avec les contraintes du réseau électrique avion. L'utilisation de moyens de conversion de puissance permet, d'une part, de convertir l'énergie électrochimique stockée dans les moyens de stockage en une énergie électrique ou mécanique permettant d'aider le dispositif de production d'électricité à répondre aux appels de courant du réseau, et, d'autre part, de convertir une partie de la puissance fournie par le dispositif de production d'électricité pour le stocker et ainsi recharger les moyens de stockage.

Selon l'invention, les deuxièmes moyens de conversion de puissance comprennent une boîte de transmission mécanique couplée à l'arbre de sortie de la turbine à gaz et comportant un arbre mécanique de couplage.

Selon un troisième aspect de l'unité de production de puissance électrique non propulsive, qui n'est pas revendiqué, les moyens de stockage peuvent comprendre un volant d'inertie mécaniquement raccordé à l'arbre mécanique de couplage de la boîte de transmission mécanique.

Selon l'invention, les moyens de stockage comprennent une batterie, et les deuxièmes moyens de conversion de puissance comprennent une machine électrique mécaniquement raccordée à la boîte de transmission via l'arbre mécanique de couplage et électriquement couplée à des bornes électriques desdits moyens de stockage.

Selon un quatrième aspect de l'unité de production de puissance électrique non propulsive, les moyens de conversion de puissance peuvent comprendre en outre un convertisseur électrique, les bornes électriques des moyens de stockage étant électriquement raccordées à ladite machine électrique via le convertisseur électrique.

Le convertisseur électrique peut être de type continu-continu, ou continu-alternatif, ou alternatif-continu, ou encore alternatif-alternatif.

L'utilisation d'un convertisseur électrique permet d'adapter le courant issu des moyens de stockage pour que la puissance mécanique supplémentaire amenée par la boîte de transmission à l'arbre de sortie permette de faire tourner l'arbre de sortie à une vitesse de rotation permettant au générateur électrique de délivrer constamment un courant alternatif à fréquence fixe.

Dans le cas où les moyens de stockage sont une batterie d'accumulateurs électrochimiques, un convertisseur continu-continu ou continu-alternatif sera utilisé en fonction du type de machine électrique utilisé dans les moyens de conversion de puissance.

En revanche, dans le cas où les moyens de stockage sont un volant d'inertie par exemple, un convertisseur alternatif-continu ou alternatif-alternatif sera utilisé en fonction du type de machine électrique utilisé dans les moyens de conversion de puissance.

Selon un cinquième aspect de l'unité de production de puissance électrique non propulsive, qui n'est pas revendiqué, les moyens de stockage peuvent comprendre une batterie, et les deuxièmes moyens de conversion de puissance peuvent comprendre un convertisseur électrique comportant un premier couplage électrique et un second couplage électrique, le premier couplage électrique étant raccordé aux connexions électriques de sortie du générateur électrique et le second couplage électrique du convertisseur électrique étant raccordé à des bornes électriques des moyens de stockage.

Dans une variante du cinquième aspect de l'unité de production de puissance électrique non propulsive, les moyens de stockage comprennent une batterie, et les moyens de conversion de puissance peuvent comprendre un convertisseur électrique comportant un premier couplage électrique raccordé au second couplage électrique du convertisseur électrique des premiers moyens de conversion et un second couplage électrique raccordé aux bornes électriques des moyens de stockage.

Selon un sixième aspect de l'unité de production de puissance électrique non propulsive, qui n'est pas revendiqué, l'unité peut comprendre en outre un convertisseur électrique alternatif-continu de sortie comportant un premier couplage électrique et un second couplage électrique, les moyens de stockage comprenant une batterie comportant des premières bornes électriques et des secondes bornes électriques, lesdites premières bornes électriques des moyens de stockage étant couplées en sortie du dispositif de production d'électricité et les dites secondes bornes électriques des moyens de stockage étant couplées audit premier couplage électrique du convertisseur électrique alternatif-continu de sortie, le second couplage électrique du convertisseur électrique alternatif-continu de sortie étant destiné à être raccordé au réseau d'alimentation électrique embarqué.

Un autre objet de l'invention propose un aéronef comportant une unité de génération de puissance électrique non propulsive telle que définie ci-dessus couplée à un réseau d'alimentation électrique embarqué.

### Brève description des dessins.

L'invention sera mieux comprise à la lecture faite ci-après, à titre indicatif mais non limitatif, en référence aux dessins annexés sur lesquels :
- la figure 1 représente schématiquement une unité de génération de puissance électrique non propulsive embarquée à bord d'un aéronef selon un premier mode de réalisation, qui ne fait pas partie de l'invention revendiquée ;
- la figure 2 présente de manière schématique une unité de génération de puissance électrique non propulsive embarquée à bord d'un aéronef selon un deuxième mode de réalisation, qui ne fait pas partie de l'invention revendiquée ;
- la figure 3 représente schématiquement une unité de génération de puissance électrique non propulsive embarquée à bord d'un aéronef selon un troisième mode de réalisation, qui ne fait pas partie de l'invention revendiquée ;
- la figure 4 représente schématiquement une unité de génération de puissance électrique non propulsive embarquée à bord d'un aéronef selon un quatrième mode de réalisation ;
- la figure 5 représente schématiquement une unité de génération de puissance électrique non propulsive embarquée à bord d'un aéronef selon un cinquième mode de réalisation,
- la figure 6 représente schématiquement une unité de génération de puissance électrique non propulsive embarquée à bord d'un aéronef selon un sixième mode de réalisation.

### Description détaillée de modes de réalisation

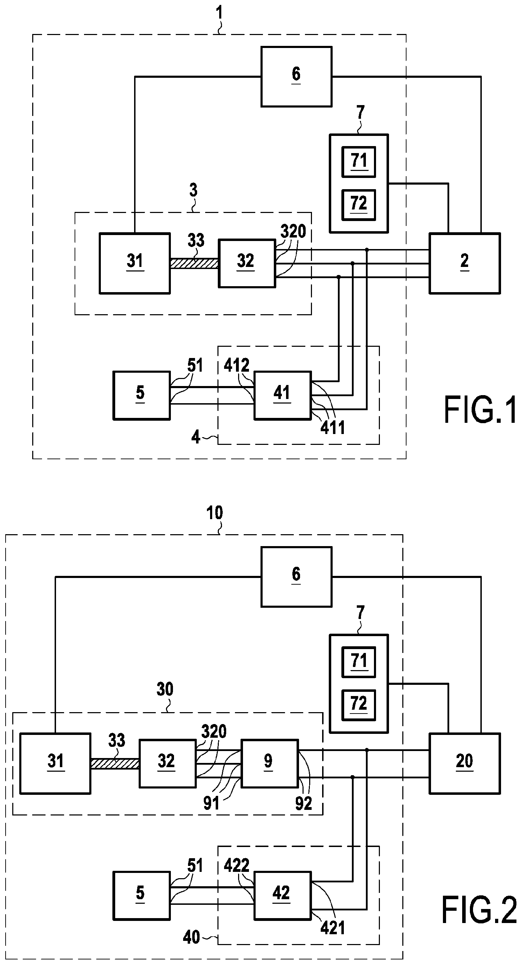

Sur la figure 1 est représentée schématiquement une unité 1 de génération de puissance électrique non propulsive embarquée à bord d'un aéronef selon un premier mode de réalisation, qui ne fait pas partie de l'invention revendiquée.

Dans le premier mode de réalisation illustré sur la figure 1, l'unité 1 est raccordée à un réseau 2 d'alimentation électrique embarqué d'un aéronef fonctionnant à partir d'un courant alternatif à fréquence variable.

L'unité 1 comprend un dispositif de production d'électricité 3 comportant une turbine à gaz 31 et un générateur électrique 32. Le générateur électrique 32 est mécaniquement raccordé à la turbine à gaz 31 via un arbre de sortie 33 de la turbine à gaz 31. Le générateur électrique 32 est couplé à l'arbre de sortie 33 via un réducteur non représenté. Le générateur électrique 32 comprend trois connexions électriques 320 raccordées chacune à une phase du réseau 2 triphasé d'alimentation électrique embarqué pour fournir un courant alternatif directement au réseau 2, la fréquence du courant délivré par le générateur électrique 32 pouvant varier en fonction de la charge du réseau 2.

Dans une variante, le générateur électrique 32 peut être couplé directement à l'arbre de sortie 33, sans réducteur, notamment dans le cas où sont utilisés des générateurs électriques capables de tourner à la vitesse de la turbine à gaz.

L'unité 1 comprend en outre des moyens de conversion de puissance 4 et une batterie d'accumulateurs 5 comportant des bornes 51. Dans le premier mode de réalisation, les moyens de conversion de puissance 4 comprennent un convertisseur électrique alternatif-continu 41 comportant trois premières bornes 411 raccordées aux trois connexions électriques 320 du générateur électrique 32, et deux secondes bornes 412 raccordées aux deux bornes 51 de la batterie 5.

L'unité 1 comprend également des moyens de régulation 6 commandant la turbine à gaz 31. Les moyens de régulation 6 sont configurés pour réguler la vitesse de rotation de la turbine à gaz 31 en fonction de la puissance électrique requise par le réseau 2.

L'unité 1 comprend aussi des moyens 7 de gestion de puissance comportant un premier module 71 configuré pour commander, dans un premier mode, la récupération et le stockage d'au moins une partie de la puissance produite par le dispositif de production d'électricité 3 dans la batterie 5 via le convertisseur électrique alternatif-continu 41, et un second module 72 configuré pour commander, dans un second mode, l'alimentation du réseau 2 d'alimentation électrique embarqué par un courant électrique produit à la fois à partir de la turbine à gaz 31 et à partir de la batterie 5, les moyens 7 de gestion de puissance étant configurés pour actionner le premier module 71 lorsque la vitesse de rotation de la turbine à gaz 31 est maximale et que le niveau de charge de la batterie est inférieur à un seuil de charge, par exemple 30% de la charge maximale de la batterie 5, et pour actionner le second module 72 lorsqu'une variation du courant requis par le réseau embarqué 2 est détectée. Les moyens 7 de gestion de puissance peuvent décider d'accélérer le dispositif de production d'électricité 3 à un niveau supérieur à celui requis par le réseau 2 afin de ramener le niveau de charge à sa valeur nécessaire pour que le second mode d'alimentation du réseau électrique 2 soit fonctionnel.

Sur la figure 2 est représentée schématiquement une unité 10 de génération de puissance électrique non propulsive embarquée à bord d'un aéronef selon un deuxième mode de réalisation, qui ne fait pas partie de l'invention revendiquée.

Les éléments identiques au premier mode de réalisation portent les mêmes références numériques.

Dans le deuxième mode de réalisation le réseau 20 d'alimentation électrique embarqué à bord de l'aéronef est un réseau à courant continu.

Pour alimenter le réseau 20 à courant continu de l'aéronef, l'unité 10 du troisième mode de réalisation diffère de l'unité 1 du premier mode de réalisation en ce que le dispositif de production d'électricité 30 comprend en outre un convertisseur électrique alternatif-continu 9, noté aussi AC/DC, comportant des premières bornes 91 auxquelles sont électriquement raccordées les trois connexions électriques 320 du générateur électrique 32 et deux secondes bornes 92 couplées chacune à une des deux phases du réseau 20.

Le générateur 32 n'est donc pas électriquement raccordé directement au réseau 20.

Les moyens de conversion de puissance 40 de l'unité 10 comprennent en outre, dans le deuxième mode de réalisation, un convertisseur électrique continu-continu 42, noté aussi DC/DC, comportant deux premières bornes 421 électriquement raccordées aux deux secondes bornes 92 du convertisseur électrique alternatif-continu 9 du dispositif de production d'électricité 30 et deux secondes bornes 422 électriquement raccordées aux deux bornes 51 de la batterie 5. Le convertisseur électrique alternatif-continu 42 est configuré pour moduler le courant continu entre la batterie 5 et le réseau 20.

Dans des variantes possibles du premier et du second mode de réalisation, non seulement le convertisseur électrique éventuellement prévu dans le dispositif de production d'électricité 3 permet d'adapter le courant en sortie du dispositif de production d'électricité, mais en outre l'unité 1 ou 10 peut également comprendre des moyens de conversion de puissance additionnels raccordés entre les bornes de sortie du dispositif de production d'électricité 3 ou 30, c'est-à-dire les connexions électriques 320 du générateur électrique 32 ou les secondes bornes 92 du convertisseur électrique 9, et les phases du réseau d'alimentation 2 ou 20. Ces moyens de conversion de puissance additionnels permettent ainsi d'adapter le courant délivré au réseau à partir du courant délivré par le dispositif de production d'électricité. Les caractéristiques du courant produit par le générateur électrique peuvent être ainsi maintenues à des mêmes valeurs grâce à l'utilisation des moyens de conversion de puissance additionnels entre le dispositif de production d'électricité et le réseau.

Ainsi les moyens de conversion de puissance additionnels peuvent être un convertisseur électrique alternatif-alternatif, alternatif-continu, continu-alternatif, ou continu-continu.

En outre, selon les variantes, le générateur électrique du dispositif de production d'électricité 3 ou 30 peut être un générateur de courant continu ou un générateur de courant alternatif.

Ainsi, selon le type de générateur électrique, le convertisseur de courant du dispositif de production d'électricité peut être un convertisseur électrique alternatif-alternatif, alternatif-continu, comme dans le deuxième mode de réalisation, continu-alternatif, ou continu-continu.

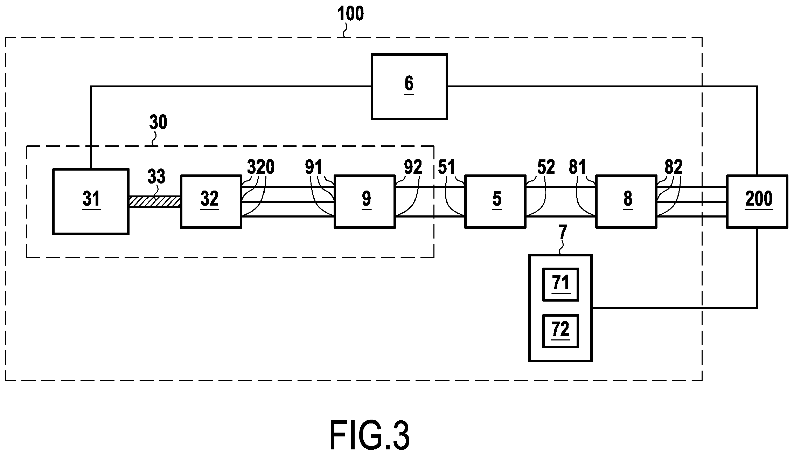

Sur la figure 3 est représentée schématiquement une unité 100 de génération de puissance électrique non propulsive embarquée à bord d'un aéronef selon un troisième mode de réalisation, qui ne fait pas partie de l'invention revendiquée.

Les éléments identiques au premier mode de réalisation portent les mêmes références numériques.

Dans le troisième mode de réalisation le réseau 200 d'alimentation électrique embarqué à bord de l'aéronef est un réseau alternatif à fréquence fixe.

Pour alimenter le réseau 200 alternatif à fréquence fixe de l'aéronef, l'unité 100 du troisième mode de réalisation diffère de l'unité 1 du premier mode de réalisation en ce que la batterie 5 comprend deux premières bornes 51 et deux secondes bornes 52, et, comme dans le deuxième mode de réalisation, le dispositif de production d'électricité 30 comprend un convertisseur électrique alternatif-continu 9 comportant des premières bornes 91 auxquelles sont électriquement raccordées les trois connexions électriques 320 du générateur électrique 32 et deux secondes bornes 92 du convertisseur électrique alternatif-continu 9 couplées aux bornes 51 de la batterie 5.

Le générateur 32 n'est donc pas électriquement raccordé directement au réseau 200.

L'unité 100 comprend en outre, dans le troisième mode de réalisation, un convertisseur électrique alternatif-continu de sortie 8 comportant deux premières bornes 81 couplées aux deux secondes bornes 52 de la batterie 5 et trois secondes bornes 82 électriquement raccordées chacune à une des trois phases du réseau triphasé 200. Le convertisseur électrique alternatif-continu de sortie 8 est configuré pour délivrer un courant alternatif de fréquence fixe au réseau 200 à partir du courant continu délivré par la batterie 5.

Les deux secondes bornes 52 de la batterie 5 peuvent être confondues avec les deux premières bornes 51 de la batterie 5.

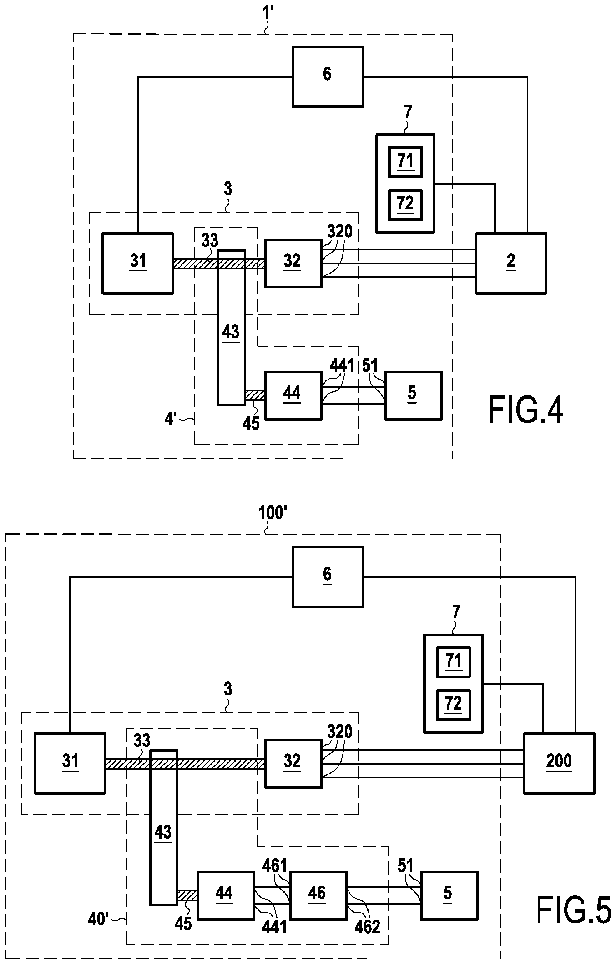

Sur la figure 4 est représentée schématiquement une unité 1' de génération de puissance électrique non propulsive embarquée à bord d'un aéronef selon un quatrième mode de réalisation.

Les éléments identiques au premier mode de réalisation portent les mêmes références numériques.

Dans le quatrième mode de réalisation le réseau 2 d'alimentation électrique embarqué à bord de l'aéronef est un réseau alternatif à fréquence variable.

Pour alimenter le réseau 2 alternatif à fréquence variable de l'aéronef, les trois connexions électriques 320 du générateur électrique 32 de l'unité 1' du quatrième mode de réalisation sont chacune directement raccordées électriquement à une des trois phases du réseau 2 tout comme pour l'unité 1 du premier mode de réalisation.

L'unité 1' du quatrième mode de réalisation, diffère de l'unité 1 du premier mode de réalisation en ce que le convertisseur électrique alternatif-continu 41, et donc les moyens de conversion de puissance 4, est remplacé par l'association d'une boîte de transmission mécanique 43, couplée mécaniquement à l'arbre de sortie 33 de la turbine à gaz 31, avec une machine électrique 44 mécaniquement couplée à la boîte de transmission 43 via un arbre 45. L'unité 1' comprend aussi des moyens de conversion de puissance 4' comprenant une boîte de transmission 43 et une machine électrique 44, la machine électrique 44 comportant deux bornes électriques 441 électriquement raccordées aux bornes 51 de la batterie 5.

Les moyens 7 de gestion de puissance sont configurés pour piloter la machine électrique 44 pour qu'elle alimente la batterie 5 en courant ou bien qu'elle prélève du courant à la batterie 5 pour fournir une puissance mécanique supplémentaire à l'arbre de sortie 33 de la turbine 31 via la boîte de transmission 43 et ainsi aider la turbine à gaz 31 à accélérer sans provoquer de surchauffe ou autre.

Sur la figure 5 est représentée schématiquement une unité 100' de génération de puissance électrique non propulsive embarquée à bord d'un aéronef selon un cinquième mode de réalisation.

Les éléments identiques au quatrième mode de réalisation portent les mêmes références numériques.

Dans le cinquième mode de réalisation le réseau 200 d'alimentation électrique embarqué à bord de l'aéronef est un réseau alternatif à fréquence fixe.

Pour alimenter le réseau 200 alternatif à fréquence fixe de l'aéronef, l'unité 100' du cinquième mode de réalisation diffère de l'unité 1' du quatrième mode de réalisation en ce que les moyens de conversion de puissance 40' comprennent en outre un convertisseur électrique continu-continu 46 comportant deux premières bornes 461 électriquement couplées aux deux bornes électriques 441 de la machine électrique 44 et deux secondes bornes 462 électriquement couplées aux deux bornes 51 de la batterie.

Le convertisseur électrique continu-continu 46 est configuré pour moduler le courant délivré par la batterie 5 à une fréquence correspondant à la fréquence fixe de fonctionnement du réseau 200.

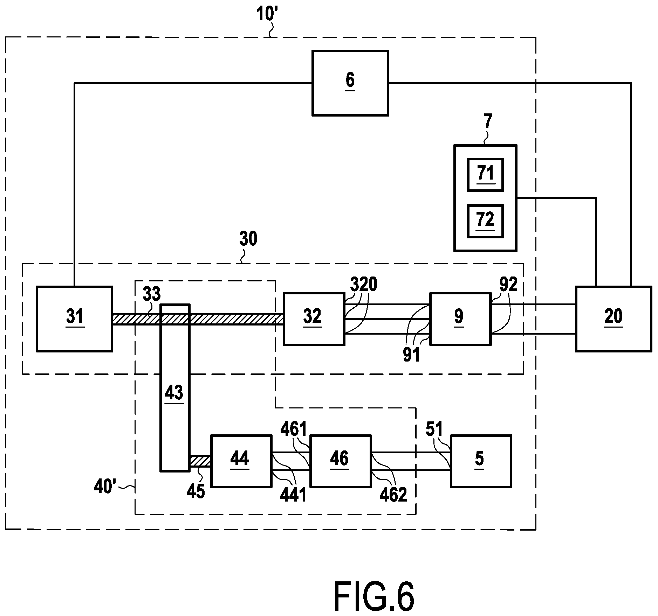

Sur la figure 6 est représentée schématiquement une unité 10' de génération de puissance électrique non propulsive embarquée à bord d'un aéronef selon un sixième mode de réalisation.

Les éléments identiques au cinquième mode de réalisation portent les mêmes références numériques.

Dans le sixième mode de réalisation le réseau 20 d'alimentation électrique embarqué à bord de l'aéronef est un réseau à courant continu.

Pour alimenter le réseau 20 à courant continu de l'aéronef, l'unité 10' du sixième mode de réalisation diffère de l'unité 100' du cinquième mode de réalisation en ce que le dispositif de production d'électricité 30 de l'unité 100' comprend en outre un convertisseur électrique alternatif-continu 9 comprenant trois premières bornes 91 électriquement couplées aux trois connexions électriques 320 du générateur électrique 32 et deux secondes bornes 92 électriquement couplées chacune à une des deux phases du réseau 20 continu.

Dans une variante de ce sixième mode de réalisation, l'unité pourrait comprendre un dispositif de production d'électricité 3 ne comportant que la turbine à gaz 31 et le générateur électrique 32, l'unité comprenant en outre un moyen de conversion de puissance additionnel comportant un convertisseur électrique alternatif-continu raccordé entre le générateur électrique 32 et le réseau 20 continu.

L'invention permet ainsi selon différentes architectures possibles de fournir une unité auxiliaire de puissance permettant de limiter autant que possible la consommation de sa turbine à gaz et ainsi d'améliorer le rendement de production électrique.

## Revendications

1. Unité (1', 10', 100') de génération de puissance électrique non propulsive destinée à être embarquée à bord d'un aéronef, l'unité (1', 10', 100') comprenant un dispositif de production d'électricité (3, 30) comportant une turbine à gaz (31) et un générateur électrique (32) mécaniquement raccordé à un arbre de sortie (33) de la turbine à gaz (31), ledit générateur électrique (32) comportant des connexions électriques (320) de sortie destinées à être électriquement raccordées à un réseau d'alimentation électrique embarqué (2, 20, 200) d'un aéronef,
**caractérisé en ce qu'**elle comprend :
- des moyens de stockage d'énergie comprenant une batterie (5),
- des moyens de régulation (6) configurés pour commander la vitesse de rotation de la turbine à gaz (31) en fonction de la puissance électrique requise par le réseau d'alimentation électrique embarqué (2, 20, 200), et
- des deuxièmes moyens de conversion de puissance (4', 40') raccordés entre les moyens de stockage (5) et le dispositif de production d'électricité (3, 30), les deuxièmes moyens de conversion de puissance (4', 40') comprenant une boîte de transmission mécanique (43) couplée à l'arbre de sortie (33) de la turbine à gaz (31) et comportant un arbre mécanique de couplage (45), ainsi qu'une machine électrique (44) mécaniquement raccordée à la boîte de transmission (43) via l'arbre mécanique de couplage (45) et électriquement couplée à des bornes électriques (51) desdits moyens de stockage (5).

2. Unité (1', 10', 100') selon la revendication 1, comprenant en outre des moyens (7) de gestion de puissance comportant un premier module (71) configuré pour commander, dans un premier mode, la récupération et le stockage d'au moins une partie de la puissance produite par le dispositif de production d'électricité (3, 30) dans lesdits moyens de stockage (5), et un second module (72) configuré pour commander, dans un second mode, l'alimentation du réseau d'alimentation électrique embarqué (2, 20, 200) par un courant électrique produit à la fois à partir de la turbine à gaz (31) et à partir des moyens de stockage (5), les moyens (7) de gestion de puissance étant configurés pour actionner le premier module (71) lorsque la vitesse de rotation de la turbine à gaz (31) est maximale et que le niveau de charge des moyens de stockage (5) est inférieur à un seuil de charge, et pour actionner le second module (72) lorsqu'une variation du courant requis par le réseau embarqué (2, 20, 200) est détectée.

3. Unité (1', 10', 100') selon la revendication 2, dans lequel les moyens de régulation (6) sont configurés pour commander une augmentation de la vitesse de rotation de la turbine à gaz (31) à une valeur supérieure à celle pour générer la puissance électrique requise par le réseau d'alimentation électrique embarqué (2, 20, 200), les moyens (7) de gestion de puissance actionnant le premier module (71) de manière à récupérer la puissance excédentaire pour recharger les moyens de stockage (5).

4. Unité (10') selon l'une des revendications 1 à 3, dans lequel le dispositif de production d'électricité (30) comprend des premiers moyens de conversion de puissance (9), lesdites connexions électriques (320) de sortie du générateur électrique (32) étant destinées à être électriquement raccordées au réseau d'alimentation électrique embarqué (20) via les premiers moyens de conversion de puissance (9).

5. Unité (10', 100') selon l'une des revendications 1 à 4, dans laquelle les deuxièmes moyens de conversion de puissance (40') comprennent en outre un convertisseur électrique (46), les bornes électriques (51) des moyens de stockage (5) étant électriquement raccordées à ladite machine électrique (44) via le convertisseur électrique (46).

6. Aéronef comportant une unité (1', 10', 100') de génération de puissance électrique non propulsive selon l'une des revendications 1 à 5 couplée à un réseau d'alimentation électrique embarqué (2, 20, 200).

## Patentansprüche

1. Einheit (1', 10', 100') zur Erzeugung von nicht antreibender elektrischer Leistung, die dazu bestimmt ist, an Bord eines Luftfahrzeugs angebracht zu werden, wobei die Einheit (1', 10', 100') eine Stromerzeugungsvorrichtung (3, 30) umfasst, die eine Gasturbine (31) und einen elektrischen Generator (32), welcher mit einer Ausgangswelle (33) der Gasturbine (31) mechanisch verbunden ist, umfasst, wobei der elektrische Generator (32) elektrische Ausgangsverbindungen (320) aufweist, die dazu bestimmt sind, mit einem Bordstromversorgungsnetz (2, 20, 200) eines Luftfahrzeugs elektrisch verbunden zu werden,
**dadurch gekennzeichnet, dass** sie umfasst:
- Energiespeichermittel, die eine Batterie (5) umfassen,
- Regelungsmittel (6), die dazu ausgelegt sind, die Drehzahl der Gasturbine (31) in Abhängigkeit von der durch das Bordstromversorgungsnetz (2, 20, 200) benötigten elektrischen Leistung zu regeln, und
- zweite Leistungsumwandlungsmittel (4', 40'), die zwischen den Speichermitteln (5) und der Stromerzeugungsvorrichtung (3, 30) angeschlossen sind, wobei die zweiten Leistungsumwandlungsmittel (4', 40') ein mechanisches Getriebe (43), das mit der Ausgangswelle (33) der Gasturbine (31) gekoppelt ist und eine mechanische Kopplungswelle (45) umfasst, sowie eine elektrische Maschine (44) umfassen, die über die mechanische Kopplungswelle (45) mit dem Getriebe (43) mechanisch verbunden ist und mit elektrischen Anschlüssen (51) der Speichermittel (5) elektrisch gekoppelt ist.

2. Einheit (1', 10', 100') nach Anspruch 1, ferner umfassend Leistungsverwaltungsmittel (7), die ein erstes Modul (71), welches dazu ausgelegt ist, in einem ersten Modus die Rückgewinnung und die Speicherung wenigstens eines Teils der durch die Stromerzeugungsvorrichtung (3, 30) erzeugten Leistung in den Speichermitteln (5) zu steuern, sowie ein zweites Modul (72) umfassen, das dazu ausgelegt ist, in einem zweiten Modus die Versorgung des Bordstromversorgungsnetzes (2, 20, 200) mit einem elektrischen Strom, der sowohl mit Hilfe der Gasturbine (31) als auch mit Hilfe der Speichermittel (5) erzeugt wird, zu steuern, wobei die Leistungsverwaltungsmittel (7) dazu ausgelegt sind, das erste Modul (71) zu betätigen, wenn die Drehzahl der Gasturbine (31) maximal ist und das Ladungsniveau der Speichermittel (5) unter einer Ladungsschwelle liegt, und das zweite Modul (72) zu betätigen, wenn eine Änderung des durch das Bordnetz (2, 20, 200) benötigten Stroms erfasst wird.

3. Einheit (1', 10', 100') nach Anspruch 2, bei der die Regelungsmittel (6) dazu ausgelegt sind, eine Erhöhung der Drehzahl der Gasturbine (31) auf einen Wert zu steuern, der größer ist als derjenige zur Erzeugung der durch das Bordstromversorgungsnetz (2, 20, 200) benötigten elektrischen Leistung, wobei die Leistungsverwaltungsmittel (7) das erste Modul (71) betätigen, um die überschüssige Leistung zum Wiederaufladen der Speichermittel (5) zurückzugewinnen.

4. Einheit (10') nach einem der Ansprüche 1 bis 3, bei der die Stromerzeugungsvorrichtung (30) erste Leistungsumwandlungsmittel (9) umfasst, wobei die elektrischen Ausgangsverbindungen (320) des elektrischen Generators (32) dazu bestimmt sind, über die ersten Leistungsumwandlungsmittel (9) mit dem Bordstromversorgungsnetz (20) elektrisch verbunden zu werden.

5. Einheit (10', 100') nach einem der Ansprüche 1 bis 4, bei der die zweiten Leistungsumwandlungsmittel (40') ferner einen elektrischen Wandler (46) umfassen, wobei die elektrischen Anschlüsse (51) der Speichermittel (5) über den elektrischen Wandler (46) mit der elektrischen Maschine (44) elektrisch verbunden sind.

6. Luftfahrzeug, umfassend eine Einheit (1', 10', 100') zur Erzeugung von nicht antreibender elektrischer Leistung nach einem der Ansprüche 1 bis 5, die mit einem Bordstromversorgungsnetz (2, 20, 200) gekoppelt ist.

## Claims

1. A unit (1', 10', 100') for generating non-propulsive electrical power for use on board an aircraft, the unit (1', 10', 100')comprising an electricity production device (330) comprising a gas turbine (31) and an electricity generator (32) mechanically connected to an outlet shaft (33) of the gas turbine (31), said electricity generator (32) including output electrical connections (320) for being electrically connected to an electrical power supply network (2, 20, 200) on board an aircraft,
the unit (1', 10', 100') being **characterized in that** it comprises:
- energy storage means comprising a battery (5);
- regulator means (6) configured to control the speed of rotation of the gas turbine (31) as a function of the electrical power required by the on-board electrical power supply network (2, 20, 200); and
- second power converter means (4', 40') connected between the storage means (5) and the electricity production device (3, 30), the second power converter means (4', 40') comprising a mechanical transmission gearbox (43) coupled to the outlet shaft (33) of the gas turbine (31) and including a mechanical coupling shaft (45) .

2. A unit (1', 10', 100') according to claim 1, further comprising power management means (7) comprising a first module (71) configured, in a first mode, to cause at least part of the power produced by the electricity production device (3, 30) to be recovered and stored in said storage means (5), and a second module (72) configured, in a second mode, to cause the on-board electricity power supply network (2, 20, 200) to be powered by both the gas turbine (31) and the storage means (5), the power management means (7) being configured to actuate the first module (71) when the speed of rotation of the gas turbine (31) is at a maximum and the level of charge in the storage means (5) is below a charge threshold, and to actuate the second module (72) on detecting variation in the electricity required by the on-board network (2, 20, 200).

3. A unit (1', 10', 100') according to claim 2, wherein the regulator means (6) are configured to cause an increase in the speed of rotation of the gas turbine (31) to a speed higher than that required for generating the electrical power required by the on-board electrical power supply network (2, 20, 200), the power management means (7) actuating the first module (71) so as to recover the excess power for recharging the storage means (5) .

4. A unit (10') according to any one of claims 1 to 3, wherein the electricity production device (30) includes first power converter means (9), said output electrical connections (320) of the electricity generator (32) being for connecting electrically to the on-board electricity power supply network (20) via the first power converter means (9).

5. A unit (10', 100') according to any one of claims 1 to 4, wherein the second power converter means (40') further comprise a power converter (46), the electrical terminals (51) of the storage means (5) being electrically connected to said electrical machine (44) via the power converter (46).

6. An aircraft including a unit (1', 10', 100') for generating non-propulsive electrical power according to any of claims 1 to 5 coupled to an on-board electricity power supply network (2, 20, 200).
